# EUROPÄISCHE PATENTANMELDUNG

(11) **EP 1 593 810 A2**
(43) Veröffentlichungstag der Anmeldung: **09.11.2005**
(21) Anmeldenummer: 05009777.3
(22) Anmeldetag: 04.05.2005
(51) Int. Cl.: E06B 9/78

(54) **Verbesserter Aufputzwickler für Rolladengurte**

(30) Priorität: 05.05.2004 DE 102004022117
(71) Anmelder: Arnhold, Hans, 63755 Alzenau (DE)
(72) Erfinder: Arnhold, Hans, 63755 Alzenau (DE)
(74) Vertreter: Rüger, Barthelt & Abel Patentanwälte

(57) **Zusammenfassung**

Eine Gurtwickeleinrichtung (7) weist eine Gurtwickelscheibe zum Aufwickeln des Rollladengurtes (5) auf. Der Antriebsmotor (16) ist liegend angeordnet und die Schnecke (54) des Antriebsmotors (16) befindet sich innerhalb einer liegenden rinnenförmigen Auffangwanne (55). Zum Kontaktieren des Motors (16) werden die Lötfahnen als Steckerstifte (56,57) verwendet, die mit Buchsen (76,77) auf der Leiterplatze (73) zusammenwirken.

Um eine Beschädigung des Getriebes durch übergroße Wickel zu vermeiden ist eine Tastrollenbremse (67) vorgesehen.

## Beschreibung

Aus Kostengründen wird bei Neubauten häufig eine manuelle Betätigung des Rollladenpanzers vorgesehen. Der Antrieb der Wickelwelle, auf die der Rollladenpanzer des Rollladens aufgewickelt wird, erfolgt durch einen Gurt. Der Gurt läuft von der Wickelwelle oberhalb des Fensters zu einem Gurtwickler.

Bei modernen Rollläden übersteigt die Länge der Wickelwelle nicht mehr die Breite der Fensterleibung. Auf diese Weise wird es möglich, bereits herstellerseits den Fensterrahmen mit den Führungsschienen und der Wickelwelle auszustatten. Als Folge dieser Anordnung läuft der Rollladengurt nunmehr nicht mehr vor der Wand, sondern vor dem Fensterrahmen innerhalb der Fensterleibung. Diese Konstruktion erfordert sehr schmale Rollladengurte und sehr zierliche.Wickler, die auf dem Fensterrahmen befestigt sind.

Der Gurtwickler besteht aus einem Gehäuse, in dem eine Gurtscheibe drehbar gelagert ist. Die Gurtscheibe enthält einen Kern, innerhalb der eine spiralförmig aufgewickelte Blattfeder aufnimmt. Die Blattfeder spannt den Kern im Sinne des Aufwickeins des Rollladengurtes vor. Außerdem enthält das Gehäuse noch eine Bremse, die ein Abwickeln des Rollladengurtes von der Gurtscheibe verhindert, solange der Rollladengurt straff nach oben aus dem Gehäuse herausläuft. Sobald der Rollladengurt von dem Fensterrahmen weggezogen wird, wird die Bremse gelöst und der Rollladengurt kann betätigt werden.

Aus der DE 102 02 075 C1 ist ein Rollladenantriebssystem in schmaler Bauweise bekannt, das einem solchen federangetriebenen Gurtwickler vorgeordnet wird, um den Rollladen elektrisch zu betätigen. Der Rollladengurt läuft durch diese Antriebseinrichtung hindurch und wird an der Auslaufseite des Antriebssystems auf den klassischen Gurtwickler mit Hilfe der Feder aufgewickelt. Die Mitnahme des Gurtes erfolgt durch Reibschluss.

Dieses Gerät lässt sich einfach nachrüsten, führt aber dazu, dass zwei Geräte übereinander an dem Fensterrahmen zu befestigen sind.

Der Antrieb der Reibrollen geschieht über ein Getriebe, das am Eingang ein schneckengetriebe enthält. Es sitzt unmittelbar auf der Ankerwelle und läuft mit einer entsprechend hohen Drehzahl. Zufolge der hohen Drehzahl wird das erforderliche Schmierfett leicht weggeschleudert und verunreinigt die Umgebung in unerwünschter Weise. Außerdem steht der weggeschleuderte Teil als Schmiermittel nicht mehr zur verfügung.

Bei dem bekannten Rolladenantrieb ist außerdem die elektrische Verbindung zu dem Antriebsmotor über Lötfahnen und Lötverbindungen hergestellt. Ein Teil der Steuerung sitzt abnehmbar in dem Gehäusedeckel, während ein anderer Teil fest auf der Getriebeplatine angeordnet ist. Die Lötverbindung ist in der Herstellung aufwändig und außerdem ist bei geöffnetem Gehäuse nicht zwangsläufig die Stromlosigkeit des Motors gewährleistet.

Die ältere, nicht vorveröffentlichte Patentanmeldung DE 103 49 724 beschreibt einen Aufputzwickler, bei dem der Gurt nicht durch den Wickler hindurch transportiert sondern innerhalb des Wicklers auf einer Wickelscheibe aufgewickelt wird. Die Bewegung des Rollladens und das Erfassen der Endlagen geschieht mit Hilfe einer Losrolle, über die der von der Wickelscheibe kommende Gurt läuft. Ein Stehenbleiben der Rolle zeigt an, der Rollladenpanzer ist auf einer Auflage aufgestoßen und der Motor muss abgeschaltet werden.

Bei diesem Aufputzwickler ist naturgemäß das Volumen an Rollladengurt, das auf der Wickelscheibe aufgespult werden kann, begrenzt. Aufgrund von Fehlinstallationen kann es theoretisch geschehen, dass zu viel Rollladengurt aufgewickelt wird und das Getriebegehäuse gesprengt wird.

Ausgehend biervon ist es Aufgabe der Erfindung, einen Aufputzwickler zu schaffen, bei dem die Schmierung des Schneckengetriebes über einen langen Zeitraum besser gewährleistet ist.

Diese Aufgabe wird erfindungsgemäß durch eine Gurtwickeleinrichtung mit den Merkmalen des Anspruches 1 gelöst.

Die neue Gurtwickeleinrichtung zum Antreiben eines Gurtes des Rollladens, weist ein Wicklergehäuse auf, in dem ein Getriebegehäuse untergebracht ist. Das Getriebegehäuse enthält eine Abfolge von Zahnrädern, wobei das Eingangszahnrad ein Schneckenrad ist, das mit einer Schnecke eines Antriebsmotors kämmt. Ausgangsseitig betätigt das Getriebe Mittel zum Antreiben eines Gurtes, die ein Zahnrad aufweisen, das mit dem letzten Zahnrad des Getriebes kämmt.

Um das Schmierfett dauerhaft in der Umgebung der Schnecke zu halten befindet sich auf jener Seite der Schnecke, die von dem Schneckenrad abliegt, eine rinnenförmige Abdeckung. Diese rinnenförmige Abdeckung nimmt das weggeschleuderte Fett auf, soweit es nicht auf das Schneckenrad gelangt.

Darüber hinaus kann die rinnenförmige Abdeckung teilweise mit Schmierfett gefüllt werden. Unregelmäßigkeiten im Lauf ermöglichen, dass Schmierfett in geringem Umfang aus der Rinne aufgenommen werden kann, um die Zahnflanken zu schmieren. Es kann eine wesentlich längere Lebensdauer des Schneckentetriebes beobachtet werden.

Im einfachsten Falle hat die rinnenförmige Abdeckung eine teilzylindrische Gestalt. Sehr einfache Montageverhältnisse ergeben sich, wenn die rinnenförmige Abdeckung Teil des Wicklergehäuses ist.

Die Montage vereinfacht sich, wenn die rinnenförmige Abdeckung an jener Seite des Wicklergehäuses angebracht ist, die im montierten Zustand des Gurtwicklers der Wand bzw. im Fensterstock unmittelbar benachbart ist.

Eine gute Auffangwirkung lässt sich erreichen, wenn die rinnenförmige Abdeckung passend zu der Anordnung des Motors liegend angeordnet ist. Gleichwohl bringt eine stehende Anordnung auch erhebliche Vorteile gegenüber Anordnungen, die keine rinnenförmige Abdeckung aufweisen.

Vorteilhafterweise besteht das Wicklergehäuse aus Kunststoff und ist deswegen leicht herstellbar.

Sehr einfache Montageverhältnisse ergeben sich, wenn das Wicklergehäuse als Stülpgehäuse ausgeführt ist derart, dass zumindest ein Teil des Gehäuses von einer von der Wand abliegenden Seite des Getriebegehäuses aufsteckbar ist.

Das Wicklergehäuse kann zweiteilig ausgeführt sein, wobei ein Teil becherartig über das Getriebegehäuse zu stülpen ist. Dabei ist vorteilhafterweise im aufstülpbaren Teil eine Leiterplatte untergebracht. Durch diese Art der Gehäuseteilung kann die Leiterplatte vollständig vom Motor getrennt werden, wenn das Gehäuse geöffnet ist. Die Gefahr eines versehentlichen Anlaufs des Motors aufgrund von irgend welchen Störung ist wirksam ausgeschlossen.

Ein sehr einfaches Getriebegehäuse besteht aus zwei im Abstand zueinander angeordneten Platinen, die durch Distanzbolzen auf Abstand gehalten sind. Ein Teil der Distanzbolzen kann auch von Achsen des Getriebes gebildet sein. Zwischen den Platinen sind die Zahnräder gelagert, die zweckmäßigerweise als Kunststoffspritzteile ausgeführt sind. Die Verwendung von Kunststoffspritzteilen trägt erheblich zur Lärmminderung bei. Die Anordnung wird in vertikaler Richtung sehr gedrungen, wenn der Antriebsmotor, bezogen auf die Gebrauchslage, liegend angeordnet ist. Dabei befindet er sich vorteilhafterweise unterhalb der Mittel zum Antreiben des Gurtes, wenn es sich um enen Gurtwickler handelt, bei dem der Gurt nicht durchgezogen wird, sondern aufgespult wird.

Das Zahnflankenspiel und die Genauigkeit des Getriebes wird gewährleistet, wenn der Antriebsmotor unmittelbar an den Getriebegëhäuse befestigt ist, so dass er von dem Benutzer bei der Installation nicht demontiert werden muss.

Die Mittel zum Antreiben des Gurtes können von einem Reibrad oder vcn einer Wickelscheibe mit dem Wickelkern gebildet sein.

Ein weiterer Aspekt der Erfindung besteht darin, eine Gurtwicklereinrichtung zu schaffen, bei der die Verdrahtung zum dem Motor herstellungsmäßig sehr einfach ist.

Diese Aufgabe wird erfindungsgemäß durch eine Gurtwickeleinrichtung mit den Merkmalen des Anspruches 23 gelöst.

Bei der neuen Gurtwickeleinrichtung befindet sich in dem Micklergehäuse ein Getriebegehäuse mit den darin gelagerten Zahnrädern. Mit Hilfe des Getriebes werden Mittel zum Betätigen des Gurtes angetrieben. Der Antriebsmotor ist mit Steckerstriften versehen, über die die elektrische Leistung dem Antriebsmotor zuführbar ist. Mit den Steckerstiften zusammenwirkende Steckbuchsen befinden sich auf einer Steuerplatine. Ohne zusätzliche Lötverbindungen wird einfach durch Zusammenstecken der Steuerplatine mit dem Motor die elektrische Verbindung zu dem Motor hergestellt.

Diese Verbindungsart vermeidet außerdem, dass die Verbindungsdrähte zu dem Motor frei liegen, wenn der Benutzer, der im Allgemeinen ein technischer Laie ist, die Gurtwickeleinrichtung bei sich zu Hause montiert.

Die Steckerstifte des Antriebsmotors können von den axial weg stehenden Lötfahnen gebildet sein, an die üblicherweise das Verbindungskabel angelötet wird. Die Lötfahnen können axial weg stehen oder radial. Hinsichtlich der Platzverhältnisse ist es günstig, wenn die Lötfahnen an jener Seite des Antriebsmotors vorstehen, die von der Schnecke abliegen. Dadurch wird eine Kollision zwischen dem Getriebe und der anzusteckenden Steuerplatine vermieden.

Ein weiterer Aspekt der Erfindung besteht darin, eine Gurtwickeleinrichtung zum Antreiben eines Gurtes eines Rollladens zu schaffen, bei der nicht die Gefahr besteht dass durch Montagefehler der Gurtwickler beschädigt wird.

Diese Aufgabe wird erfindungsgemäß mit der Gurtwickeleinrichtung mit den Merkmalen des Anspruches 42, 61 oder 62 gelöst.

Die erfindungsgemäße Gurtwickeleinrichtung weist ein Getriebe auf, das in einem Getriebegehäuse gelagerte Zahnräder umfasst. Mit Hilfe des Getriebes wird eine Gurtscheibe angetrieben die einen Wickelkern aufweist, an dem ein Ende des Gurtes zu befestigen ist. Die Gurtscheibe wird mit Hilfe eines Antriebsmotors über das Getriebe wahlweise in Gang gesetzt.

Um die Bewegung des Rolladengurtes zu erfassen, ist eine Tastrolle vorgesehen, das nur mitgenommen wird, wenn der Gurt straff darüber läuft. Sobald der Gurt schlaff wird, bleibt die Tastrolle stehen. Hieraus kann geschlossen werden, ob der Rolladenpanzer auf der Fensterbank oder einem Hindernis aufgestoßen ist. Der Motor wird abgeschaltet, um ein vollständiges Abwickeln des Gurtes von der Gurtscheibe zu verhindern.

Bei einer solchen Anordnung kann es geschehen, dass durch einen Montagefehler zu viel Gurtband auf die Gurtscheibe aufgewickelt wird. Da der Antriebsmotor nicht stehen bleibt, würde das weitere Aufwickeln zu einem übermäßigen Anwachsen des Wickels auf der Gurtscheibe führen. Der Wickel könnte das Getriebe beschädigen oder sprengen.

Um dies zu vermeiden ist eine Tastrollenbremse vorgesehen, die einen in den Wickelraum der Gurtscheibe ragenden Hebel aufweist. Oder es wird eine Schalter verwendet, der mit einem Fühlhebel in den Wickelraum ragt. Als dritte Möglichkeit kommt eine hebe in Frage der den Sensor in Abhängigkeit von den Füllgrad der Wickescheibe abdunkelt.

Die Tastrolle ist vorteilhafterweise als Rolle ausgeführt mit einer Breite, entsprechend der Breite des anzutreibenden Gurtes.

Die Tastrolle kann mit einem Abschnitt versehen sein, der zusammen mit entsprechendem Hartleiterbauelement als Reflexlichtschranke wirkt. Dadurch wird der Schlupf zwischen der Tastrolle und dem Rolladengurt auf ein Minimum reduziert, weil es keine bremsenden Kräfte für die Tastrolle gibt, außer der Lagerreibung.

Eine sehr einfache Tastrollenbremse besteht in einem zweiarmigen Hebel, wobei der eine Arm zum Zusammenwirken mit der Tastrolle ausgebildet ist, während der andere Arm als Fühlhebel dient und in den Wickelraum der Gurtscheibe ragt. Sobald der Wickel zu groß wird, drückt der an der Tastrolle liegende Arm zunehmend gegen die Tastrolle und blockiert es, obwohl Rollladengurt darüber gezogen wird. Damit erhält die Steuerung eine ähnliche Information, wie beim Aufstoßen des Rollladenpanzers auf einen Gegenstand und schaltet den Antriebsmotor ab, noch bevor der Wickel das Getriebe beschädigt hat.

Im Übrigen sind Weiterbildungen der Erfindung Gegenstand von Unteransprüchen.

Beim Durchlesen wird außerdem klar, dass eine Reihe von Abwandlungen möglich sind, die aus den jeweiligen Gegebenheiten folgen und im Belieben des Fachmanns liegen.

In der Zeichnung ist ein Ausführungsbeispiel des Gegenstandes der Erfindung dargestellt. Es zeigen:
- Fig. 1: eine Fensterlaibung mit der erfindungsgemäßen Gurtwickeleinrichtung, in einer perspektivischen Darstellung,
- Fig. 2: die Gurtwickeleinrichtung nach Figur 1 mit geöffneten Gehäuse, in einer geschnittenen Seitenansicht,
- Fig. 3: das Getriebe der Gurtwickeleinrichtung in einer Ansicht von hinten,
- Fig.4: die Tastrolle der Gurtwickeleinrichtung in einer Seitenansicht, und

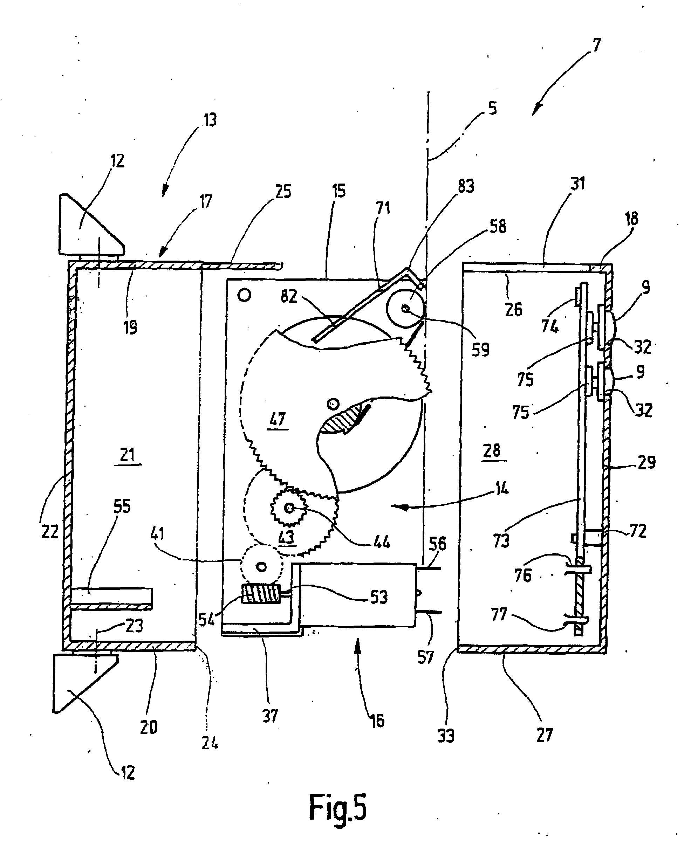

- Fig. 5: die Gurtwickeleinrichtung nach Figur 1 mit geöffneten Gehäuse, in einer geschnittenen Seitenansicht, und einer Sensorblende.

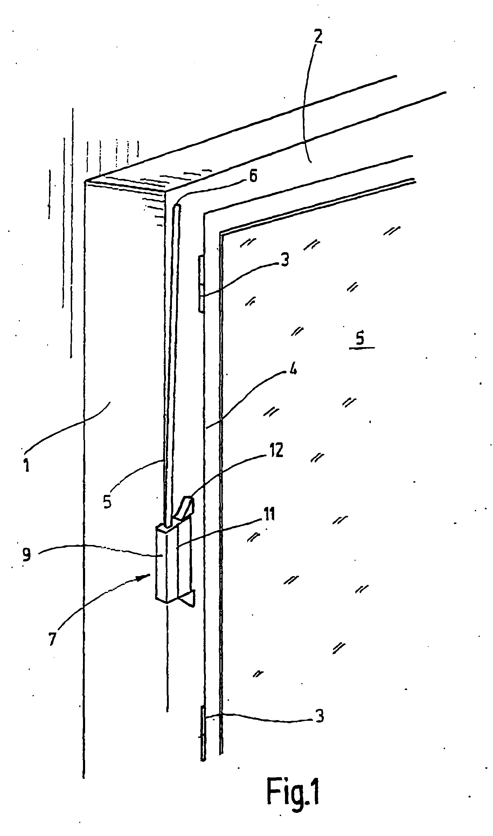

Figur 1 zeigt eine Fensterlaibung 1, in der ein Fensterrahmen 2 befestigt ist. An dem Fensterrahmen 2 ist mit Hilfe von zwei Scharnieren 3 ein Flügelrahmen 4 anscharniert, in den eine Fensterscheibe 5 eingesetzt ist. An der Außenseite des Fensterrahmens oder -stocks 2 befindet sich ein in der Figur nicht erkennbar Rollladenpanzer, der auf eine auf der Außenseite befindliche, nicht gezeigte Wickelwelle aufwickelbar ist. Um den Rollladenpanzer aufzuziehen ist ein Rolliadengurt 5 vorgesehen, der durch eine Öffnung 6 in dem Fensterrahmen 2 von der Gurtscheibe der Wickelwelle nach innen führt. Der Rollladengurt 5 läuft in eine Gurtwickeleinrichtung 7 ein und wird dort aufgewickelt. Die Gurtwickeleinrichtung 7 sitzt auf der Innenseite des Fensterrahmens 2.

Mit Hilfe von Betätigungsknöpfen 9 kann die Gurtwickeleinrichtung 7 programmiert werden. Sie ist mit Hilfe von winkeln 12, die an der Innenseite des Fensterrahmens 2 festgeschraubt sind, um eine Vertikalachse schwenkbar befestigt.

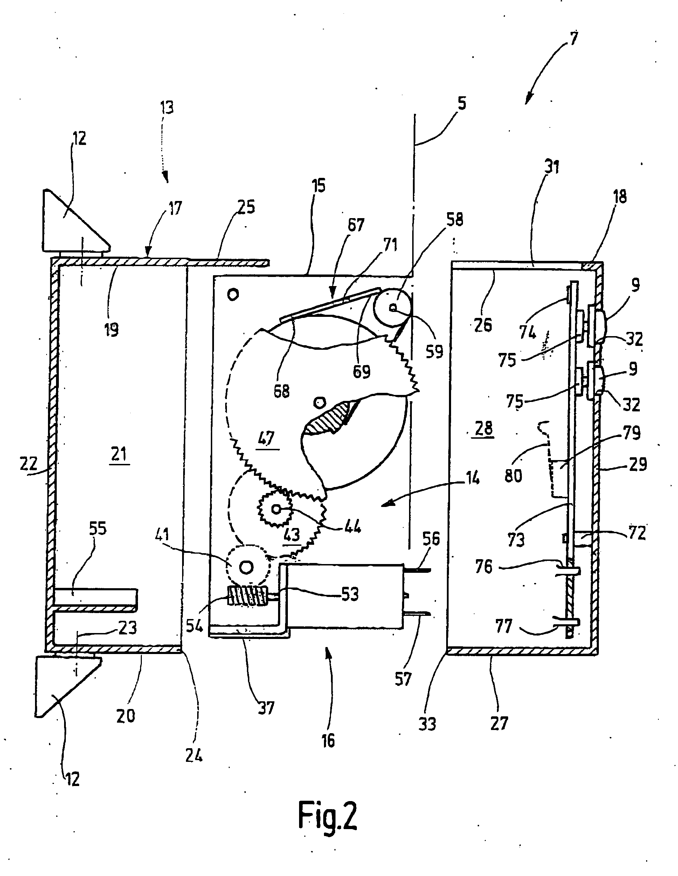

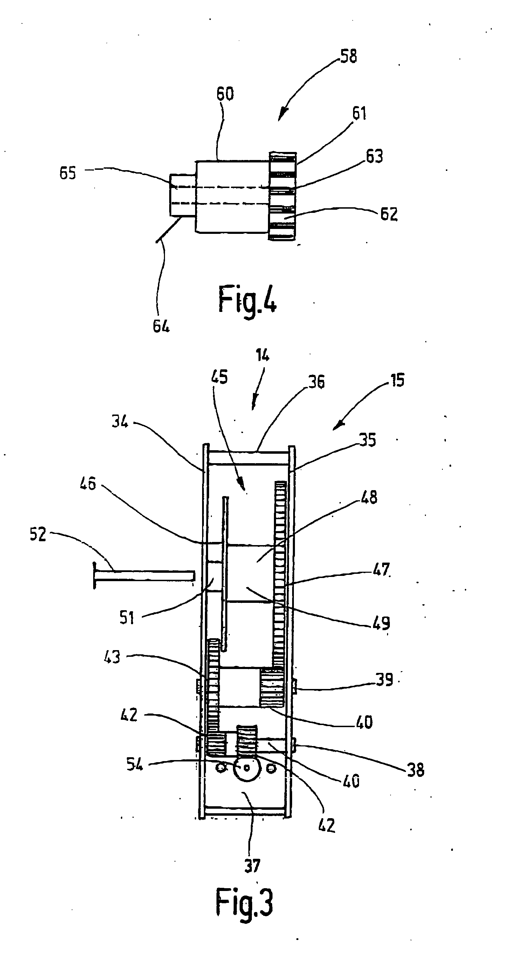

Der innere Aufbau des Gurtwicklers ergibt sich aus den Figuren 2 und 3.

Wie die in Längsrichtung geschnittene Explosionsdarstellung von Fig. 2 erkennen lässt, gehören zu der Gezrtwickeleinrichtung 7 ein Gurtwicklergehäuse 13, ein Getriebe 14, ein Getriebegehäuse 15 sowie ein Antriebsmotor 16.

Das Wicklergehäuse 13 setzt sich aus zwei becherförmigen Schalen 17 und 18 mit rechteckigem Grundriss zusammen. Die Gehäuseschale 17 wird von einer umlaufenden Seitenwandanordnung, bestehend aus einer oberen Seitenwand 19, einer dazu parallelen ebenen unteren Seitenwand 20 sowie zwei seitlichen Wänden begrenzt, von denen wegen der geschnittenen Darstellung lediglich die Innenseite der Seitenwand 21 zu erkennen ist. Die weggeschnittene seitliche Wand ist dazu spiegelbildlich zu denken.

Sämtliche Wände 19, 20, 21 ragen rechtwinklig aus einem ebenen rechteckigen Boden oder Rückwand 22 vor, mit dem sie einstückig sind.

In der Nähe der Rückwand 22 sind an der oberen und der unteren Seitenwand 19, 20 die beiden Befestigungswinkel 12 angebracht, die bezüglich einer parallel zu der Gehäusewand 23 verlaufenden Achse 23 an dem Gehäuse 13 schwenkbar sind.

An der von der Rückwand 22 abliegenden Seite enden sämtliche seitlichen Wände 19, 20, 21 an einer gemeinsamen Ebene liegenden Fügefläche 24. Lediglich von der oberen Wand 19 steht in Verlängerung dieser eine Zunge 25 vor, die jedoch deutlich schmäler ist als der lichte Abstand zwischen den seitlichen Wänden 21.

Das Gehäuseteil 18 ist ebenfalls becherförmig mit rechteckigem Grundquerschnitt. Es wird in derselben Weise wie der Gehäuzeabschnitt 17 von einer oberen Wand 26, einer unteren Wand 27 sowie zwei seitlichen Wänden 28 begrenzt von denen wegen der geschnittenen Darstellung lediglich die eine sichtbar ist.

Die Wände 26, 27, 28 stehen einstückig aus einer Frontplatte 29 vor, die praktisch Deckungsgleich mit der Rückwand 22 ist.

Die obere Wand 26 enthält einen Schlitz 31, der in montiertem Zustand, bis auf einem schmalen Spalt zum Durchtritt des Gurtes 5, von der Zunge 25 verschlossen ist.

In der Frontplatte 29 sind zwei Bohrungen 32 enthalten, die verschieblich die beiden Betätigungsknöpfe 9 aufnehmen.

In montiertem Zustand stößt die Fügefläche 24 an eine dazu komplementäre Fügefläche 33 der Gehäuseschale 18. Die Fügefläche 33 wird von den freien Enden der Seitenwände 26, 27, 28 gebildet. Die beiden Fügeflächen 24, 33 sind deckungsgleich, so dass sich im montierten Zustand ein im Wesentlichen geschlossenes Gehäuse bildet, das lediglich durch den Schlitz für den Rollladengurt 5 offen ist.

Die Gehäuseteile 17 und 18 sind Kunststoffspritzteile.

Die Laschen zur Sicherung der beiden Gehäuseteile aneinander sind aus Übersichtlichkeitsgründen nicht dargestellt. Die Verbindungstechnik ist dem Fachmann hinlänglich bekannt und braucht nicht im Einzelnen erläutert zu werden.

Das Getriebe 14 ist in Fig. 3 in einer Ansicht aus der Sicht der Rückwand 22 gezeigt. Wie dort zu erkennen ist, setzt sich das Getriebegehäuse 15 aus zwei ebenen Platinen 34 und 35 zusammen, die jeweils Blechstanzteile sind. Die beiden Platinen 34 und 35 werden durch Platinenpfeiler 36 bzw. Befestigungsflansche 37 sowie vernieteten Achsen 38 und 39 im richtigen, parallelen Abstand zueinander festgehalten.

Zu dem Getriebe 14 gehört ein Eingangszahnradsatz 40, der sich aus einem Schneckenrad 41 und einem Ritzel 42 zusammensetzt. Das Schneckenrad 41 befindet sich mittig zwischen den beiden Platinen 34 und 35 während das Ritzel 42, das mit dem Schneckenrad 41 einstückig ist, neben der Innenseite der Platine 34 läuft. Der Zahnradsatz aus dem Schneckenrad 41 und dem Ritzel 42 dreht sich auf der zwischen den Platinen 34 und 35 vernieteten Achse 38.

Das Ritzel 42 kämmt mit einem Zahnrad 43, das drehfest mit einem Ritzel 44 verbunden ist. Das Ritzel 44 ist der gegenüberliegenden Platine 35 benachbart. Die beiden Zahnräder 43 und 44, die miteinander verbunden sind, drehen sich auf der Achse 39, die ebenfalls zwischen den Platinen 34 und 35 vernietet ist.

Zum Aufwickeln des Gurtes 5 innerhalb der Gurtwickeleinrichtung 7 ist eine Gurtwickelscheibe 45 vorgesehen. Diese umfasst eine seitliche Bordscheibe 46, die neben der Innenseite des Zahnrades 43 läuft, sowie einer Bordscheibe in Gestalt eines großen Zahnrades 47, das mit dem Ritzel 44 kämmt. Zwischen der Bordscheibe 46 und dem als Bordscheibe dienenden Zahnrad 47 befindet sich ein wickelraum, entsprechend der Breite des aufzuwickelnden Rollladengurtes 5. Sowohl die Bordscheibe 46 als auch das Zahnrad 47 sind einstückig mit einer Nabe 48 verbunden, aus der ein Befestigungshaken 47 zum Verankern des Rolladengurtes 5 vorsteht. Auf der Außenseite der Bordscheibe 46 ist nur ein zylindrischer Ansatz 51 vorhanden, um zu verhindern ,dass die Bordscheibe 46 an dem Zahnrad 43 streift.

Die Wickelscheibe 45 sitzt auf einer Achse 52, die herausnehmbar ist und in nicht weiter erkennbaren miteinander fluchtenden Bohrungen in den beiden Platinen 34 und 35 steckt, wenn die Gurtwickeleinrichtung 7 vollständig montiert ist.

An dem Winkelflansch 37, der mit den Platinen 34 und 35 über nicht gezeigte Laschen verbunden ist, ist, wie Fig. 2 erkennen lässt, das permanent erregter Gleichstrommotor ausgeführte Antriebsmotor 16 befestigt. Seine Ankerwelle 53 trägt eine Schnecke 54, die mit dem Schneckenrad 41 kämmt.

Der Antriebsmotor 16 weist eine im wesentlichen zylindrisches Gehäuse mit einem Durchmesser auf derart, dass er zwischen die beiden Platinen 34 und 35 passt. Wie zu erkennen ist, ist die Achse des Antriebsmotors 16 horizontal, also liegend, ausgerichtet wobei sich die Schnecke 55 in Richtung auf den Boden 22 des Wicklergehäuses 13 erstreckt. Sie hat, wie ferner zu erkennen ist, einen erheblichen Abstand gegenüber dem unteren Teil des Winkelflansches 37.

Das Schneckenrad 41 befindet sich an der entsprechenden Stelle, d.h. in der Nähe des Bodens 22 des Wicklergehäuses 13. Die Achse 52 hingegen liegt ungefähr in der Mitte zwischen den vertikalen Rändern der im übrigen rechtwinkligen Platinen 34 und 35.

Von der Innenseite der Rückwand 22 steht eine ringförmiger Auffangwanne 55 vor, die nach oben schalenförmig und in Richtung auf den Antriebsmotor 16 offen ist. Sie hat eine teilzylindrische Gestalt.

Im montierten Zustand liegt die Auffangwanne 55 mit geringem Spiel unterhalb der Schnecke 54 und ragt bis fast an den aufragenden Teil des Winkelflansches 37 heran. Sie dient als Auffangwanne und zum Schutz gegen Wegschleudern von Schmierfett, das zur Schmierung auf der Schnecke 54 aufgebracht ist.

Aus der Stirnseite, die den Befestigungswinkel 37 gegenüberliegt, stehen aus dem Antriebsmotor 16 zwei Anschlussfahnen 56 und 57 vor, die über das Lichtraumprofil das zwischen den beiden Platinen 34 und 35 begrenzt ist.

Im oberen Bereich ist zwischen den beiden Platinen 34 und 35 eine Zählrolle 58 auf einer Achse 59 drehbar gelagert. Die Zählrolle 58 weist eine zylindrische Mitnahmefläche 60 auf, die zur einen Seite in axialer Richtung an einem Bund 61 endet. Der Bund 61 ist mit Reflektormarken 62 versehen, die von dunklen Abschnitten 63 unterbrochen sind. An der gegenüberliegenden Stirnseite ist die Zählrolle 57 mit einer Distanzbüchse 64 versehen, damit sie mit wenig Axialspiel zwischen die beiden Platinen 34 und 35 passt. Die zylindrische Mitnahmefläche 59 fluchtet mit dem Raum zwischen der Bordscheibe 46 und dem als Bordscheibe dienenden Zahnrad 47.

Durch die Abtastrolle 58 führt eine zylindrische Bohrung 65 mit deren Hilfe die Abtastrolle 67 auf der Achse 59 drehbar gelagert ist.

Im oberen Bereich befindet sich zwischen den beiden Platinen 34 und 35 eine Tastrollenbremse 67. Die Tastrollebremse 67 hat die Form eines zweiarmigen Hebels mit den beiden Armen 68 und 69. Zwischen den beiden Hebeln 68 und 69 befinden sich seitlich wegstehende Fortsätze 71, die in Bohrungen der Platinen 34 und.35 ragen und mit deren Hilfe die Tastrollebremse 67 zwischen den Platinen 34 und 35 schwenkbar ist. Die Schwenkachse liegt parallel zu der Drehachse der Abtastrolle 58 sowie den Achsen der Zahnräder 47, 43, 44 und 42.

Der Hebel 68 weist eine Breite auf derart, dass er in den Raum zwischen der Bordscheibe 46 und dem Zahnrad 47 eindringen kann. Der andere Arm 69 hat etwa die gleiche Breite und eine solche Länge, dass er sich, wie Fig. 2 zeigt, an der Außenseite der Mitnahmefläche 60 anlegen kann und zwar so, dass seine Stirnseite im Sinne einer Auflaufbremse wirkt um eine gewisse Servowirkung zu erzeugen. Seine Kante liegt näher an der Drehachse 71 als es dem Abstand zwischen der Drehachse 71 und der Achse 59 entspricht.

Auf der Innenseite der Frontplatte 29 stehen mehrere angespritzte Pfeiler 72 vor, die gemeinsam eine Leiterplatte 73 tragen. Die Leiterplatte 73 ist im oberen Bereich mit einem Fotosensor 74 versehen, der die Abfolge der hellen und dunklen Felder 62, 63 der Abtastrolle 58 erfasst. Auf der gegenüberliegenden Seite sind auf der Leiterplatte 73 Tastschalter 75 aufgelötet, die über die Betätigungsknöpfe 9 zu betätigen sind. Im unteren Bereich ist die Leiterplatte 73 mit zwei Steckbuchsen 76 und 77 versehen. Die beiden Steckbuchsen 76 und 77 sind zu den Lötfahnen 56 und 57 komplementär, d.h. die Lötfahnen, die an sich zum Anlöten eines Drahtes vorgesehen sind, werden bei der erfindungsgemäßen Anordnung als Steckerstifte eingesetzt, die kontaktgebend mit den ßuchsen 76 und 77 zusammensteckbar sind.

Bei der werksseitigen Montage wird das Schneckengetriebe bestehend aus dem Schneckenrad 41 und der Schnecke 54 mit Fett geschmiert. Außerdem kommt eine ausreichende Vorratsmenge Fett in die rinnenförmige Auffangwanne 55.

Sodann wird das Getriebe 14 in die Gehäuseschale 17 eingesteckt und dort mit Hilfe von nicht weiter gezeigten Rasthaken verrastet.

Die insoweit beschriebene Gurtwickeleinrichtung 7 ist wie folgt zu montieren:

Der Benutzer nimmt zunächst die vordere Gehäuseschale 18 ab. Damit erhält er Zugang zu der Wickelscheibe 45, die er durch Herausziehen der Achse 52 zwischen den Platinen 34 und 35 herauszieht.

Sodann kann der Benutzer die Gehäuseschale 17 mit dem daran befestigten Getriebe 14 in der in Fig. 1 gezeigten Weise an den Fensterstock 2 mit Hilfe der Befestigungswinkel 12 festschrauben.

Mit der Befestigung der Gehäuseschale 17 an dem Fensterstock 2 ist auch das Getriebe 14 starr mit dem Fensterstock 2 verbunden, da es durch nicht veranschaulichte Laschen und Haken in der Gehäuseschale 17 verankert ist. Diese nicht gezeigten Laschen und Haken wirken beispielsweise mit den beiden Platinen 34 und 35 zusammen.

Seitens des Benutzers und Anwenders besteht keine Notwendigkeit zum Zweck der Montage das Getriebe 14 aus dem Gehäuseteil 17 heraus zu nehmen.

Nach dem Befestigen der Gehäuseschale 17 schneidet der Benutzer den Rollladengurt 5 in der Länge ab und verankert das freie Ende an dem Haken 49 der Gurtscheibe 45. Er wickelt ca. eine Umdrehung weit das verankerte Ende auf der Nabe 48 auf und führt die Wickelscheibe 45 sodann zwischen die beiden Platinen 34 und 35 ein. Nachdem sich die Wickelscheibe 47 an der richtigen Stelle befindet, steckt der Benutzer die einsteckbare Achse 52 durch die entsprechenden Bohrungen in den beiden Platinen 34 und 35. Diese Bohrungen sind von der Gehäuseschale 17 nicht abgedeckt.

Die Einstecktiefe der Achse 52 wird durch einen entsprechenden flachen Kopf, der sich an der Außenseite der Platine 34 anlegt, festgelegt.

Im montierten Zustand läuft, wie Fig. 2 erkennen lässt, der Rollladengurt 5 auf der dem Benutzer zugekehrten, d.h- der vom Fensterstock 2 abliegenden Seite an der Zählrolle 59 vorbei.

Sobald die Installationen soweit fortgeschritten ist, steckt der Benutzer die vordere Gehäuseschale 18 auf das Getriebe 14 auf. Beim Aufstecken dringen die als Steckerkontakte dienenden Lötfahnen 55 und 56 in die in der Leiterplatte 73 eingelöteten Steckbuchsen 76 und 77 ein und machen mit der Leiterplatte Kontakt. Um eine ausreichende Kontaktgabe zu erreichen, sind die Steckbuchsen 76 und 77 in bekannter Weise als Federsteckbuchsen ausgeführt.

Durch nicht weiter gezeigte Schrauben wird die Gehäuseschale 18 an der Gehäuseschale 17 gesichert.

Im vollständig montierten Zustand steht der Fotosensor 74 der Abfolge von hellen und dunklen Feldern 62, 63 gegenüber, um eine Drehbewegung der Abtastrolle 58 zu erfassen.

Mit Hilfe der Schalter 75 kann der Benutzer die Bewegung des Rollladengurtes 5 programmieren bzw. auslösen oder stoppen.

Wenn angenommen wird, der Benutzer hat durch Betätigung einer der Tasten 9 die Gurtwickeleinrichtung 7 im Sinne eines Hochzlehens des Rollladenpanzers eingeschaltet, wird der Rollladengurt 5 auf die Gurtwickelscheibe 47 aufgewickelt. Dies geschieht, indem der Antriebsmotor 16 in der entsprechenden Drehrichtung in Gang gesetzt wird.

Mit zunehmenden Hochziehen des Rollladenpanzers steigt der Durchmesser des auf der Nabe 48 gebildeten Wickels aus Rollladengurt.

Normalerweise erreicht der Rollladenpanzer seine obere physikalische Endlage noch deutlich, bevor der Wickel auf der Nabe 48 unzulässig angewachsen ist.

Sollte ein Montagefehler vorliegen und der Rollladengurt 5 bei heruntergelassenem Rollladenpanzer noch zu lang sein, wird der Wickel auf der Nabe 48 so groß, dass er die Tastrollenbremse 67 betätigt. Mit zunehmendem Wickel wird durch den Wickel der Hebel 68 angehoben, womit der andere Hebel 69 zunehmend in Richtung auf die Mitnahmefläche 59 bewegt wird. Es wird schließlich ein Zustand erreicht, bei der die Hebel 69 durch den entstandenen Wickel so kräftig gegen die Mitnahmefläche 59 angepresst wird, dass sich die Abtastrolle 58 nicht mehr drehen kann. Der Fotosensor 74 wird keine wechselsignale mehr bekommen, was die auf der Leiterplatte 74 vorhandene Steuerung veranlasst, den Strom zu dem Motor 16 abzuschalten. Auf diese Weise ist wirksam verhindert, dass der Wickel auf der Nabe 48 einen Umfang annehmen kann, der das Getriebe zerstört.

Eine Bewegung in umgekehrter Richtung ist jederzeit möglich und wird durch die Steuerung nicht verhindert. Nach einer gewissen Zeit der Drehbewegung in der entgegengesetzten Richtung wird irgendwann auch die Tastrollenbremse 67 gelöst und es kann sich die Tastrolle 58 wieder bewegen. Der nächste Stillstand wird erreicht, wenn der Rollladenpanzer auf der Fensterbank aufstößt und der Rollladengurt 5 schlaff wird. Der schlaffe Gurt hebt von der Tastrolle 58 ab, was zu einem Stillstand der Tastrolle führt und damit die Steuerung veranlasst, den Strom für den Antriebsmotor 16 still zu setzen.

Der Motor 16 läuft mit einer verhältnismäßig hohen Drehzahl. Das auf der Schnecke 54 vorhandene Schmierfett wird leicht heruntergeschleudert, womit die Schmierung alsbald nachlassen würde. Da jedoch die Schnecke 54 sich innerhalb der Auffangwanne 55 dreht, wird das heruntergeschleuderte Fett zum großen Teil dort aufgefangen und kann in den erforderlichen Spuren auf die Schnecke 54 zurück gelangen. Dies geschieht aufgrund der endlichen Viskosität, was bei langem Stillstand gegebenenfalls dafür sorgt, dass das Fett in Spuren bis zu der Schnecke 54 zurückgelangt.

Die Wirkungsweise der Auffangwanne 55 ist in Verbindung mit einem liegenden Antriebsmotor erläutert. Es ist jedoch möglich einen stehenden Antriebsmotor zu verwenden, d.h. einen Motor, der so installiert ist, dass die Ankerwelle vertikal ausgerichtet ist. Sinngemäß ist die Rinne dann ebenfalls vertikal ausgerichtet. Gegebenenfalls mit einem entsprechenden Boden versehen, um ein Wegfließen des Fetts zu verhindern.

Schließlich ist die Wirkung der Auffangwanne unabhängig davon, ob es sich um eine Gurtwickeleinrichtung der gezeigten Art handelt, oder eine Gurtwickeleinrichtung, bei der die Nabe 48 nicht dazu eingerichtet ist, das freie Ende zu verankern, sondern als Reibradantrieb wirkt, wie des beispielsweise bei der in der Beschreibungseinleitung erläuterten Anordnung der Fall ist.

Sinngemäß das gleiche gilt auch für die Steckverbindung zwischen dem Antriebmotor 16 und der Leiterplatte 73. Diese Steckverbindung ist, wie der Fachmann unschwer erkennt, nicht auf Gurtwickeleinrichtungen beschränkt, bei denen der Gurt aufgewickelt wird. Die Anordnung kann auch bei solchen Gurtwickeleinrichtungen verwendet werden, bei denen anstelle der Gurtwickelscheibe Friktionsrollen zum Durchziehen des Rollladengurtes durch die Gurtwickeleinrichtung verwendet werden.

Lediglich die in dem Ausführungsbeispiel erläuterte Tastrollenbremse macht nur bei Gurtwickeleinrichtungen Sinn, bei denen der Rollladengurt 5 tatsächlich innerhalb der Gurtwickeleinrichtung 7 aufgewickelt wird.

Um eine Überfüllung der Gurtscheibe 47 zu verhindern, kann anstelle der Tastrollenbremse 67 auch ein Schalter verwendet werden. In Fig. 2 ist gestrichelt ein Schalter 79 eingezeichnet, der mit seinem Fühlhebel 80 in den Wickelraum zwischen der Bordscheibe 46 und dem Zahnrad 47 hineinragt. Der Schalter ist auf der Leiterplatte 73 an geeigneter Stelle aufgelötet.

Wenn der Wickel auf der Wickelscheibe 47 zu groß werden würde, erreicht er den Fühlhebel 80, was zur Betätigung des Schalters 79 führt. Der Antriebsmotor 16 wird stillgesetzt und er kann lediglich in der entgegengesetzten Richtung wieder in Gang gebracht werden.

Schließlich besteht die Möglichkeit, wie Fig. 4 zeigt, anstelle der mechanisch wirkenden Tastrollenbremse 67 einen ähnlich gelagerten Hebel 81 zu verwenden. Dieser Hebel 81 ist ebenfalls zweiarmig mit einem Arm 82 und einem Arm 83. Er ist, ähnlich wie die gezeigten Tastrollenbremse 67, mit Hilfe der Fortsätze 71 zwischen den beiden Platinen 34 und 35 schwenkbar gelagert. Der Arm 82 ragt zwischen die Bordscheibe 46 und das Zahnrad 47. Der andere Arm 83 ist verlängert und ragt mit einem nach unten abgewinkelten Ende in den Spalt zwischen dem Bund 61 der Abtastrolle 58 und dem Fotosensor 74.

Wenn der Wickel zu groß wird, wird der Arm 82 angehoben und der Arm 83 bewegt sich vor den Fotosensor 74, womit ein Stillstand der Tastrolle 58 simuliert wird. Durch die Gewichtsverteilung der Arme 82 und 83 befindet sich sonst der Arm 82 außerhalb des Lichtwegs zwischen den Reflektormarken und dem Fotosensor 74.

Eine Gurtwickeleinrichtung weist eine Gurtwickelscheibe zum Aufwickeln des Rollladengurtes auf. Der Antriebsmotor ist liegend angeordnet und die Schnecke des Antriebsmotors befindet sich innerhalb einer liegenden rinnenförmigen Auffangwanne. Zum Kontaktieren des Motors werden die Lötfahnen als Steckerstifte verwendet, die mit Buchsen auf der Leiterplatte zusammenwirken.

Um eine Beschädigung des Getriebes durch übergroße Wickel zu vermeiden ist eine Tastrollenbremse vorgesehen.

## Patentansprüche

1. Gurtwickeleinrichtung (7) zum Antreiben eines Gurts (5) eines Rollladens,
mit einem Wicklergehäuse (13),
mit einem Getriebe (14), das umfasst,
- ein Getriebegehäuse (15), das in dem Wicklergehäuse (13) angeordnet ist,
- ein Eingengszahnradsatz (41,42), das in dem Getriebegehäuse (15) drehbar gelagert ist und das sich aus einem Schneckenrad (41) und einem Stirnzahnrad (42) zusammensetzt, und
- ein Zwischenzahnradsatz (43,44), der in dem Getriebegehäuse (15) drehbar gelagert ist und der sich aus einem stirnverzahnten Rad (43), das mit dem Stirnzahnrad (42) des Eingangszahnradsatzes (41,42) kämmt, und einem stirnverzahnten Ritzel (44) zusammensetzt,
mit Mitteln (45) zum Antreiben des Gurts, die ein damit drehfest verbundenes Zahnrad (47) aufweist, das mit dem Ritzel (44) des Zwischenradsatzes (43,44) kämmt,
mit einem Antriebsmotor (16), der eine Ausgangswelle aufweist, auf der drehfest eine Schnecke (54) sitzt, die mit dem Schneckenrad (41) des Eingangszahnradsatzes (41,42) kämmt*,* und
mit einer rinnenförmigen Abdeckung (55), die die Schnecke (54) auf der von dem Schneckenrad (41) abliegenden Seite teilweise umgibt.

2. Gurtwicklereinzichtung nach Anspruch 1, **dadurch gekennzeichnet, dass** die rinnenförmige Abdeckung (55) eine teilzylindrische Gestalt aufweist.

3. Gurtwicklereinrichtung nach Anspruch 1, **dadurch gekennzeichnet, dass** die rinnenförmige Abdeckung (55) Bestandteil des wicklergehäuses (13) ist.

4. Gurtwicklereinrichtung nach Anspruch 1, **dadurch gekennzeichnet, dass** die rinnenförmige Abdeckung (55) an jener Seite des Wicklergehäuses (13) angebracht ist, die im montierten Zustand des Gurtwicklers (7) der Wand bzw. dem Fensterstock (2) unmittelbar benachbart ist.

5. Gurtwicklereinrichtung nach Anspruch 1, **dadurch gekennzeichnet, dass** die rinnenförmige Abdeckung (55) liegend angeordnet ist.

6. Gurtwicklereinrichtung nach Anspruch 1, **dadurch gekennzeichnet, dass** die rinnenförmige Abdeckung (55) stehend angeordnet ist.

7. Gurtwicklereinrichtung nach Anspruch 1, **dadurch gekennzeichnet, dass** das Wicklergehäuse (13) aus Kunststoff besteht.

8. Gurtwicklereinrichtung nach Anspruch 1, **dadurch gekennzeichnet, dass** das Wicklergehäuze (13) als Stülpgehäuse ausgeführt ist derart, dass zumindest ein Teil des Wickleigehäuse (13) von einer von der Wand abliegenden Seite des Getriebegehäuses (15) her aufsteckbar ist.

9. Gurtwicklereinrichtung nach Anspruch 1, **dadurch gekennzeichnet, dass** das Wicklergehäuse (13) zweiteilig ist wobei ein Teil becherartig über das Getriebegehäuse (15) zu stülpen ist.

10. Gurtwicklereinrichtung nach Anspruch 9, **dadurch gekennzeichnet, dass** der über das Getriebegehäuse (15) zu stülpende Teil. (18) eine Leiterplatte (73) enthält.

11. Gurtwicklereinrichtung nach Anspruch 1, **dadurch gekennzeichnet, dass** das Wicklergehäuse (13) Befestigungsmittel (12) zum Anbringen an der Wand oder einem Fensterstock (2) aufweist.

12. Gurtwicklereinrichtung nach Anspruch 1, **dadurch gekennzeichnet, dass** das Getriebegehäuse (15) von zwei im Abstand zueinander angeordneten Platinen (34,35) gebildet ist.

13. Gurtwicklereinrichtung nach Anspruch 12, **dadurch gekennzeichnet, dass** die Platinen (34,35) durch Distanzbolzen (36,38,39) auf Abstand gehalten ist.

14. Gurtwicklereinrichtung nach Anspruch 13, **dadurch gekennzeichnet, dass** ein Teil der Distanzbolzen (36,38,39) von Achsen (36,39) des Getriebes (14) gebildet ist.

15. Gurtwicklereinrichtung nach Anspruch 1, **dadurch gekennzeichnet, dass** die Zahnräder (41,42,43,44,47) des Getriebes (14) Kunststoffspritzteile sind.

16. Gurtwicklereinrichtung nach Anspruch 1, **dadurch gekennzeichnet, dass** der Motor (16), bezogen auf die Gebrauchslage, liegend angeordnet ist.

17. Gurtwicklereinrichtung nach Anspruch 1, **dadurch gekennzeichnet, dass** der Antriebsmotor (16) ein permanenterregter Gleichstrommotor ist.

18. Gurtwicklereinrichtung nach Anspruch 1, **dadurch gekennzeichnet, dass** der Antriebsmotor (16), bezogen auf die Gebrauchsstellung, unterhalb der Mittel (45) zum Antreiben des Gurtes angeordnet ist.

19. Gurtwicklereinrichtung nach Anspruch 1, **dadurch gekennzeichnet, dass** der Antriebsmotor (16) an dem Getriebegehäuse (15) befestigt ist.

20. Gurtwicklereinrichtung nach Anspruch 1, **dadurch gekennzeichnet, dass** die Mittel (45) zum Antreiben des Gurtes von wenigstens einem Reibrad gebildet ist.

21. Gurtwicklereinrichtung nach Anspruch 1, **dadurch gekennzeichnet, dass** die Mittel (45) zum Betätigen des Gurtes von einer Wickelscheibe mit einem Wickelkern (48) gebildet ist, an dem der Gurt (5) befestigt ist.

22. Gurtwicklereinrichtung nach Anspruch 1, **dadurch gekennzeichnet, dass** die Wickelscheibe (45) beidseitig von Borden (46,47) begrenzt ist, von denen der eine von einem Zahnrad (47) gebildet ist.

23. Gurtwickeleinrichtung (7) zum Antreiben eines Gurts (5) eines Rollladens,
mit einem Wicklergehäuse (13),
mit einem Getriebe (14), das ein Getriebegehäuse (15) und darin gelagerte Zahnräder (41,42,43,44,47) umfasst und das in dem Wicklergehäuse (13) angeordnet ist,
mit Mitteln (45) zum Antreiben des Gurts, die über das Getriebe (14) angetrieben sind,
mit einem Antriebsmotor (16) zum Antreiben des Getriebes (14), der Steckstifte (56,57) aufweist, über die elektrische Leistung dem Antriebsmotor (16) zuführbar ist, und
mit einer Steuerplatine (73), die mit Steckbuchsen (76,77) versehen ist, in die die Steckstifte (56, 57) des Antriebsmotors (16) einsteckbar sind.

24. Gurtwicklereinrichtung nach Anspruch 23, **dadurch gekennzeichnet, dass** der Antriebsmotor (16) mit axial weg stehenden Lötfahnen (56,57) versehen ist, die als Stecker stets bedienen.

25. Gurtwicklereinrichtung nach Anspruch 24, **dadurch gekennzeichnet, dass** die Lötfahnen (56,57) an jener Seite des Antriebsmotors (16) vorstehen, die von der Schnecke (54) abliegt.

26. Gurtwicklereinrichtung nach Anspruch 23, **dadurch gekennzeichnet, dass** das Wicklergehäuse (13) aus Kunststoff besteht.

27. , Gurtwicklereinrichtung nach Anspruch 23, **dadurch gekennzeichnet, dass** das Wicklergehäuse (13) als Stülpgehäuse ausgeführt ist derart, dass zumindest ein Teil des Gehäuses (13) von einer von der Wand abliegenden Seite des Getriebegehäuses (15) aufsteckbar ist.

28. Gurtwicklereinrichtung nach Anspruch 23, **dadurch gekennzeichnet, dass** das Wicklergehäuse (13) zweiteilig ist wobei ein Teil becherartig über das Getriebegehäuse (15) zu stülpen ist.

29. Gurtwicklereinrichtung nach Anspruch 28, **dadurch gekennzeichnet, dass** der über das Getriebegehäuse (15) zu stülpende Teil die Steuerplatine (73) enthält.

30. Gurtwicklereinrichtung nach Anspruch 23, **dadurch gekennzeichnet, dass** das Wicklergehäuse (13) Befestigungsmittel (12) zum. Anbringen an der Wand oder einem Fensterstock (2) aufweist.

31. Gurtwicklereinrichtung nach Anspruch 23, **dadurch gekennzeichnet, dass** das Getriebegehäuse (15) von zwei im Abstand zueinander angeordneten Platinen (34,35) gebildet ist.

32. Gurtwicklereinrichtung nach Anspruch 31, **dadurch gekennzeichnet, dass** die Platinen (34,35) durch Distanzbolzen (36,38,39) auf Abstand gehalten ist.

33. Gurtwicklereinrichtung nach Anspruch 32, **dadurch gekennzeichnet, dass** ein Teil der Distanzbolzen (36,38,39) von Achsen (38, 39) des Getriebes (14) gebildet ist.

34. Gurtwicklereinrichtung nach Anspruch 23, **dadurch gekennzeichnet, dass** die Zahnräder (41,42,43,44,47) des Getriebes (14) Kunststoffspritzteile sind.

35. Gurtwicklereinrichtung nach Anspruch 23, **dadurch gekennzeichnet, dass** der Motor (16), bezogen auf die Gebrauchslage, liegend angeordnet ist.

36. Gurtwicklereinrichtung nach Anspruch 23, **dadurch gekennzeichnet, dass** der Antriebsmotor (16) ein permanenterregter Gleichstrommotor ist.

37. Guttwicklereinrichtung nach Anspruch 23, **dadurch gekennzeichnet, dass** der Antriebsmotor (16), bezogen auf die Gebrauchsstellung, unterhalb der Mittel (45) zum Antreiben des Gurtes angeordnet ist.

38. Gurtwicklereinrichtung nach Anspruch 23, **dadurch gekennzeichnet, dass** der Antriebsmotor (16) an dem Getriebegehäuse (15) befestigt ist.

39. Gurtwicklereinrichtung nach Anspruch 23, **dadurch gekennzeichnet, dass** die Mittel (45) zum Antreiben des Gurtes von wenigstens einem Reibrad gebildet ist.

40. Gurtwicklereinrichtung nach Anspruch 23, **dadurch gekennzeichnet, dass** die Mittel (45) zum Betätigen des Gurtes von einer Wickelscheibe mit einem Wickelkern (48) gebildet ist, an dem der Gurt (5) befestigt ist.

41. Gurtwicklereinrichtung nach Anspruch 23, **dadurch gekennzeichnet, dass** die Wickelscheibe (45) beidseitig von Borden (46,47) begrenzt ist, von denen der eine von einem Zahnrad (47) gebildet ist.

42. Gurtwickeleinrichtung (7) zum Antreiben eines Gurts (5) eines Rollladens,
mit einem Getriebe (14), das ein Getriebegehäuse (15) und darin gelagerte Zahnräder (41,42,43,44,47) umfasst,
mit einer Gurtschetbe (45), die einen Wickelkern (48), an dem ein Ende des Gurtes (5) zu befestigen ist, und ein damit drehfest verbundenes Zahnrad (47) aufweist, das über das Getriebe (14) angetrieben ist,
mit einem Antriebsmotor (16) zum Antreiben des Getriebes (14),
mit einer von dem Gurt (5) angetriebenen Tastrolle (58) zum Erfassen der Gurtbewegung,
mit einer Tastrollenblemse (67), die einen in den Wickelraum der Gurtischeibe (45) ragenden Hebel (68) aufweist.

43. Gurtwicklereinrichtung nach Anspruch 42, **dadurch gekennzeichnet, dass** die Tastrolle (58) einer in die Breite des anzutreibenden Gurtes (5) angepasst die Mitnahmefläche (60) aufweist.

44. Gurtwicklereinrichtung nach Anspruch 42, **dadurch gekennzeichnet, dass** die Tastrolle (58) einen Abschnitt (61) aufweist, der als Reflexlichtschranke wirkt.

45. Gurtwicklereinrichtung nach Anspruch 42, **dadurch gekennzeichnet, dass** die Tastrollenbremse (67) als zweiarmiger Hebel ausgeführt ist, wobei der eine Arm (69) zum Zusammenwirken mit der Tastrolle (58) ausgebildet ist, während der andere Arm (68) den Fühlhebel bildet.

46. Gurtwicklereinrichtung nach Anspruch 42, **dadurch gekennzeichnet, dass** der mit der Tastrolle (58) zusammenwirkende Arm (69) mit der Mitnahmefläche (60) der Tastrolle (58) zusammenwirkt.

47. Gurtwicklereinrichtung nach Anspruch 42, **dadurch gekennzeichnet, dass** das Wicklergehäuse (13) aus Kunststoff besteht.

48. Gurtwicklereinrichtung nach Anspruch 42, **dadurch gekennzeichnet, dass** das Wicklergehäuse (13) als Stülpgehäuse ausgeführt ist, derart, dass zumindest ein Teil des Gehäuses (13) von einer von der Wand abliegenden Seite des Getriebegehäuses (15) aufsteckbar ist.

49. Gurtwicklereinrichtung nach Anspruch 42, **dadurch gekennzeichnet, dass** das Wicklergehäuse (13) zweiteilig ist wobei ein Teil becherartig über das Getriebegehäuse (15) zu stülpen ist.

50. Gurtwicklereinrichtung nach Anspruch 49, **dadurch gekennzeichnet, dass** der über das Getriebegehäuse (15) zu stülpende Teil eine Leiterplatte (73) enthält.

51. Gurtwicklereinrichtung nach Anspruch 42, **dadurch gekennzeichnet, dass** das Wicklergehäuse (13) Befestigungsmittel (12) zum Anbringen an der Wand oder einem Fensterstock (2) aufweist.

52. Gurtwicklereinrichtung nach Anspruch 42, **dadurch gekennzeichnet, dass** das Getriebegehäuse (15) von zwei im Abstand zueinander angeordneten Platinen (34,35) gebildet ist.

53. Gurtwicklereinrichtung nach Anspruch 52, **dadurch gekennzeichnet, dass** die Platinen (34,35) durch Distanzbolzen (36,38,39) auf Abstand gehalten ist.

54. Gurtwicklereinrichtung nach Anspruch 53, **dadurch gekennzeichnet, dass** ein Teil der Distanzbolzen (36,38,39) von Achsen (38,39) des Getriebes (14) gebildet ist.

55. Gurtwicklereinrichtung nach Anspruch 42, **dadurch gekennzeichnet, dass** die Zahnräder (41,42,43,44,47) des Getriebes (14) Kunststoffspritzteile sind.

56. Gurtwicklereinrichtung nach Anspruch 42, **dadurch gekennzeichnet, dass** der Motor (16), bezogen auf die Gebrauchslage, liegend angeordnet ist.

57. Gurtwicklereinrichtung nach Anspruch 42, **dadurch gekennzeichnet, dass** der Antriebsmotor (16) ein permanenterregter Gleichstrommotor ist.

58. Gurtwicklereinrichtung nach Anspruch 42, **dadurch gekennzeichnet, dass** der Antriebsmotor (16), bezogen auf die Gebrauchsstellung, unterhalb der Mittel (45) zum Antreiben des Gurtes angeordnet ist.

59. Gurtwicklereinrichtung nach Anspruch 42, **dadurch gekennzeichnet, dass** der Antriebsmotor (16) an dem Getriebegehäuse (15) befestigt ist.

60. Gurtwicklereinrichtung nach Anspruch 42, **dadurch gekennzeichnet, dass** die Wickelscheibe (45) beidseitig von Borden (46,47) begrenzt ist, von denen der eine von einem Zahnrad (47) gebildet ist.

61. Gurtwickeleinrichtung (7) zum Antreiben eines Gurts (5) eines Rolladens,
mit einem Getriebe (14), das ein Getriebegehäuse (15) und darin gelagerte Zahnräder (41,42,43,44,47) umfasst,
mit einer Gurtscheibe (45), die einen Wickelkern (48), an dem ein Ende des Gurtes (5) zu befestigen ist, und ein damit drehfest verbundenes Zahnrad (47) aufweist, das über das Getriebe (14) angetrieben ist,
mit einem Antriebsmotor (16) zum Antreiben des Getriebes (14), und
mit einem Schalter (79), der mit einem Tastglied (80) in den Wickelraum der Gurtscheibe (45) ragt um den Füllgrad der Gurtscheibe (45) abzutasten.

62. Gurtwickeleinrichtung (7) zum Antreiben eines Gurts (5) eines Rolladens,
mit einem Getriebe (14), das ein Getriebegehäuse (15) und darin gelagerte Zahnräder (41,42,43,44,47) umfasst,
mit einer Gurtscheibe (45), die einen Wickelkern (48), an dem ein Ende des Gurtes (5) zu befestigen ist, und ein damit drehfest verbundenes Zahnrad (47) aufweist, das über das Getriebe (14) angetrieben ist,
mit einem Antriebsmotor (16) zum Antreiben des Getriebes (14),
mit einer von dem Gurt (5) angetriebenen Tastrolle (58) zum Erfassen der Gurtbewegung,
mit einem fotoelektrischen Sensor (74) zu Abtasten der Bewegung der Tastrolle (58),
mit einem Blendenhebel (83), der vor dem Sensor (74) bewegbar ist und dem ein in den Wickelraum der Gurtscheibe (45) ragender Fühlhebel (82) zugeordnet ist, um den Füllgrad der Gurtscheibe (45) abzutasten.
